# EUROPÄISCHE PATENTSCHRIFT

(11) **EP 3 305 527 B1**
(45) Veröffentlichungstag und Bekanntmachung des Hinweises auf die Patenterteilung: **19.06.2019**
(21) Anmeldenummer: 17189583.2
(22) Anmeldetag: 06.09.2017
(51) Int. Cl.: B41F 33/02

(54) **DRUCKMARKENSENSOR**
PRINTING MARK SENSOR
DÉTECTEUR DE MARQUES D'IMPRESSION

(30) Priorität: 06.10.2016 EP 16192622
(43) Veröffentlichungstag der Anmeldung: 11.04.2018
(73) Patentinhaber: Sick AG, 79183 Waldkirch (DE)
(72) Erfinder: Alt, Gerhard, 79350 Sexau (DE); Bierbaum, Alexander, 79286 Glottertal (DE)

(56) Entgegenhaltungen:
- EP-A2- 0 892 280
- DE-A1- 10 127 249
- DE-A1-102007 059 242
- DE-A1-102013 015 036
- DE-U1-202014 104 975

## Beschreibung

Die vorliegende Erfindung betrifft einen Druckmarkensensor nach dem Oberbegriff von Anspruch 1 und ein Verfahren nach dem Oberbegriff von Anspruch 8.

Im Rahmen von Applikationslösungen erfüllen Sensoren, insbesondere Druckmarkensensoren zumeist eine spezifische Aufgabe, wie beispielsweise eine Kontrast-, Farb- oder Mustererkennung oder eine Detektion einer Anwesenheit eines Objektes bzw. der Druckmarke. Der Sensor erkennt ein Merkmal und bewirkt über ein Schaltsignal eine Aktion in einer Steuerung.

Die DE 101 27 249 A1 offenbart ein Verfahren zum Ermitteln einer Position eines Druckbildes auf einem Bedruckstoffstück in einer Druckmaschine. Dabei wird mit einem ersten optischen Sensor eine Marke erfasst, die auf dem Bedruckstoffstück angeordnet ist. Es wird mit einem zweiten optischen Sensor eine Kante des Bedruckstoffstücks erfasst und es wird mit einer Auswerteeinheit der Abstand der Marke von der Kante berechnet.

Die DE 10 2007 059 242 A1 offenbart ein Verfahren und eine Vorrichtung zur Erkennung eines in einer Druckmaschine geführten Druckbogens, insbesondere zur Erkennung, ob der Druckbogen bedruckt oder unbedruckt ist, wobei ein eine Sendeeinheit und eine Empfangseinheit umfassender optischer Sensor eingesetzt wird, mittels dessen das Vorhandensein einer auf dem Druckbogen angeordneten Farbmarke erfasst wird, die anzeigt, dass der Bogen bedruckt ist, und mit jedem Erkennen eines bedruckten und/oder unbedruckten Bogens ein Zählimpuls ausgegeben wird.

Die EP 0 892 280 A2 offenbart ein Verfahren zum Betrieb einer optoelektronischen Sensoranordnung mit einer Lichtempfangseinheit zum Empfang von aus einem Überwachungsbereich stammenden Licht und mit einer Steuer- und Auswerteeinheit. Bei dem Verfahren wird die Lichtempfangseinheit in mehrere Empfangszonen unterteilt, die jeweils einer Objektzone im Überwachungsbereich entsprechen.

Die DE 10 2013 015 036 A1 offenbart einen Sensor zur optischen Erfassung von Markierungen auf einer laufenden Materialbahn. Der Sensor umfasst eine Lichtquelle zur Erzeugung eines Lichtflecks auf der laufenden Materialbahn, einen Lichtempfänger zum Empfangen des seitens des Lichtflecks zurückgeworfenen Lichts, und eine Signalverarbeitungseinheit zur Auswertung des Ausgangssignals der des Lichtempfängers, wobei zwischen dem Lichtempfänger und der Signalverarbeitungseinheit ein Regelverstärker zur optimalen Pegelaussteuerung geschaltet ist, und/oder wobei zwischen der Signalverarbeitungseinheit und der Lichtquelle ein steuerbarer Treiber zur optimalen Intensitätsansteuerung der Lichtquelle geschaltet ist.

Die DE 20 2014 104 975 U1 offenbart einem Sensor in einem ersten Gehäuse mit einem optoelektronischen Sendeelement und einem optoelektronischen Empfangselement und einer Steuer- und Auswerteeinheit und einem Speicher, wobei die Steuer-und Auswerteeinheit dazu ausgebildet ist, Informationen aus dem Speicher über das optoelektronische Sendeelement optisch an ein räumlich getrenntes Kommunikationsgerät mit einem zweiten optoelektronischen Sendeelement, einem zweiten optoelektronischen Empfangselement, einer zweiten Steuer- und Auswerteeinheit, einem zweiten Speicher und einer Anzeigeeinheit in einem zweiten Gehäuse zu senden und Informationen über das optoelektronische Empfangselement optisch von dem Kommunikationsgerät zu empfangen.

Eine Aufgabe der Erfindung besteht darin, einen verbesserten Druckmarkensensor bereitzustellen, der neben dem primären Sensorsignal zusätzliche Informationen zur Prozesssteuerung liefern soll.

Die Aufgabe wird gemäß Anspruch 1 gelöst durch einen Druckmarkensensor zur Auswertung von Druckmarken von Detektionsobjekten, mit mindestens einem Lichtsender und mindestens einem Lichtempfänger mit einer Steuer- und Auswerteeinheit zur Auswertung eines Lichtempfängersignals des Lichtempfängers,mit einem Ausgang für ein Sensorsignal, welches von der Steuer- und Auswerteeinheit gebildet wird aufgrund des Lichtempfängersignals,wobei ein elektronischer Speicher vorhanden ist, dadurch gekennzeichnet, dass eine Vielzahl von nacheinander detektierten Lichtempfängersignalen von mehreren nacheinander erfassten Druckmarken abgespeichert werden,wobei die Steuer-und Auswerteeinheit ausgebildet ist, die Vielzahl von Lichtempfängersignalen von mehreren nacheinander erfassten Druckmarken auszuwerten und aus dem zeitlichen Verlauf dieser Lichtempfängersignale Ergebnisdaten und/oder Kenngrößen zu erzeugen, die Rückschlüsse auf eine Umgebung des Druckmarkensensors, auf die Detektionsobjekte, auf die Druckmarken und/oder einen Bedruckungsprozess ermöglichen, wobei Lichtsender, Lichtempfänger, und die Steuer- und Auswerteeinheit in einem gemeinsamen Sensorgehäuse angeordnet sind.

Die Aufgabe wird weiter gelöst gemäß Anspruch 8 durch ein Verfahren zur Auswertung von Druckmarken von Detektionsobjekten mit einem Druckmarkensensor mit mindestens einem Lichtsender zum Aussenden von Lichtstrahlen und mindestens einem Lichtempfänger zum Empfangen von remittierten Lichtstrahlen und Auswertung eines Lichtempfängersignals des Lichtempfängers durch eine Steuer- und Auswerteeinheit,wobei ein Sensorsignal von der Steuer- und Auswerteeinheit gebildet wird aufgrund des Lichtempfängersignals und an einem Ausgang ausgegeben wird,dadurch gekennzeichnet, dass eine Vielzahl von nacheinander detektierten Lichtempfängersignalen von nacheinander erfassten Druckmarken in einem elektronischen Speicher abgespeichert werden,wobei die Vielzahl von Lichtempfängersignalen von mehreren nacheinander erfassten Druckmarken ausgewertet werden und aus dem zeitlichen Verlauf dieser Lichtempfängersignale Ergebnisdaten und/oder Kenngrößen erzeugt werden, die Rückschlüsse auf eine Umgebung des Druckmarkensensors, auf die Detektionsobjekte, auf die Druckmarken und/oder einen Bedruckungsprozess ermöglichen, wobei der Lichtsender, der Lichtempfänger, und die Steuer-und Auswerteeinheit in einem gemeinsamen Sensorgehäuse angeordnet sind.

Vorteilhafte Weiterbildungen der vorliegenden Erfindung sind Gegenstand der abhängigen Ansprüche.

Im Betrieb werden also eine Vielzahl von nacheinander detektierten Signalverläufen oder daraus abgeleitete charakteristischen Größen aufgezeichnet und miteinander in Beziehung gebracht.

Der Sensor weist eine leistungsfähige Steuer- und Auswerteeinheit auf mit ausreichender Rechenleistung, um eine Auswertung der Vielzahl von Lichtempfängersignalen vornehmen zu können.

Neben der primären Sensoraufgabe kann der Druckmarkensensor weitere wichtige Informationen zu seiner Umgebung und/oder dem Prozess liefern und wertvolle Informationen zum Betriebszustand der Maschine und des zu verarbeitenden Materials beisteuern, bzw. auch Aussagen über die im Rahmen der Applikation bzw. Anwendung erforderlichen Leistungsreserven treffen und sogar Aussagen zur Qualität der Integration des Sensors in das Gesamtsystem liefern. Diese Informationen stehen während des Arbeitsbetriebes bzw. während einem, Operating Mode' des Druckmarkensensors zur Verfügung.

Die nacheinander detektierten Lichtempfängersignale von einer Vielzahl von Detektionsereignissen werden direkt in der Steuer- und Auswerteeinheit des Druckmarkensensors ausgewertet. Dadurch stehen der Steuer- und Auswerteeinheit die originären und nicht weiter gefilterten, reduzierten oder sonst in irgend einer Weise bereits vorverarbeiteten Lichtempfängersignale zur Verfügung, wodurch qualitativ hochwertige Sensorempfängersignale zur Verfügung stehen.

Die nacheinander detektierten Lichtempfängersignale brauchen auch nicht vollständig an eine außerhalb des Sensors bzw. außerhalb des Sensorgehäuses angeordnete Verarbeitungseinheit übertragen werden.

Beispielsweise werden die Lichtempfangssignale über Stunden oder gar Tage erfasst und ausgewertet. Dadurch können langsame, d.h. sich über eine Vielzahl von Detektionsereignissen entwickelnde Veränderungen des Bedruckungsprozesses erkannt werden.

Dabei werden die Lichtempfangssignale beispielsweise zu vorbestimmten Zeitpunkten bzw. Zeitintervallen erfasst. Dadurch werden beispielsweise Lichtempfangssignale von Druckmarken lediglich stichprobenweise detektiert, so dass beispielsweise nur jede n-te Druckmarke erfasst wird.

Weiter ist es beispielsweise vorgesehen; die erfassten Lichtempfängersignale zu komprimieren; um Speicherplatz zu sparen.

Beispielsweise können auch mehrere Lichtempfänger vorgesehen sein. Besonders bevorzugt sind beispielsweise zwei Lichtempfänger vorgesehen.

Bei dem elektronischen Speicher handelt es sich bevorzugt um einen nichtflüchtigen Speicher, beispielsweise einen Flash-Speicher.

Die Druckmarken werden häufig in Verpackungsmaschinen eingesetzt, um den Verpackungsprozess zu steuern. Bei den Druckmarken kann es sich um Schwarz/Weiss-Druckmarken oder auch um farbige Druckmarken handeln.

In einer vorteilhaften Weiterbildung der Erfindung sind die Ergebnisdaten und/oder die Kenngrößen an dem Ausgang oder an einem zusätzlichen Ausgang oder an einer zusätzlichen Schnittstelle ausgebbar bzw. werden diese ausgegeben. Dadurch werden quasi nur bereits ausgewertete Lichtempfängersignale als Ergebnisdaten und/oder Kenngrößen ausgegeben, die jedoch im Vergleich zu den originären Lichtempfängersignalen vom Datenumfang kleiner sind und weniger Bandbreite bei der Übertragung benötigen.

Dadurch können die Ergebnisdaten und/oder Kenngrößen gleichzeitig zu dem Sensorsignal ausgegeben werden.

Bei dem zusätzlichen Ausgang oder der zusätzlichen Schnittstelle kann es sich beispielweise um eine IO-Link Schnittstelle handeln, die einen Datenaustausch zwischen dem Druckmarkensensor und einer Anlagensteuerung ermöglicht.

Jedoch können beispielsweise auch andere elektrische Schnittstellen, Bussysteme, Feldbussysteme usw. vorgesehen werden.

In einer vorteilhaften Weiterbildung der Erfindung sind die Ergebnisdaten und/oder Kenngrößen kontinuierlich erzeugbar und kontinuierlich ausgebbar bzw. werden diese ausgegeben.

Dadurch können die Ergebnisdaten und/oder Kenngrößen ständig ausgewertet werden, wodurch eine ständige Kontrolle beispielsweise einer Verpackungsmaschine oder Druckmaschine möglich ist.

Die Ergebnisdaten und/oder Kenngrößen werden dabei optional mit einem Zeitstempel ausgegeben oder quasi in Echtzeit, so dass lediglich eine Verzögerungszeit durch die Verarbeitung in der Steuer- und Auswerteeinheit vorhanden ist.

In einer besonderen Ausführungsform ist die Steuer- und Auswerteeinheit ausgebildet aus der Vielzahl von Lichtempfängersignalen auf die realen Applikationsanforderungen in Bezug auf die Materialgeschwindigkeit, die auftretenden Tastweitenschwankungen, die Signaldynamik, Fremdlicht- und Temperatureinflüsse zu schließen.

Die Materialgeschwindigkeit kann beispielsweise aufgrund der erfassten Bewegung der Druckmarke erfasst werden. Dabei werden die Lichtempfängersignale der Druckmarke z.B. durch mehrere Empfänger erfasst und aus dem zeitlichen Bezug die Geschwindigkeit ermittelt, die dann beispielsweise über die vorhandene Schnittstelle der Prozesssteuerung zur Verfügung gestellt werden kann.

Schwankungen der Tastweite gegenüber der Nenntastweite des Sensors beeinflussen den Kontrast der Marke zum Hintergrund. Dies kann bei geringen Kontrasten zum Verlust von Detektionsereignissen oder zu Ungenauigkeiten in der Bewertung der Markenposition führen. Aus den Empfängersignalen kann der reale Umfang der Tastweitenschwankung ermittelt und in Bezug zu den Kontrasten gesetzt werden. Das Maß der Tastweitenschwankung bestimmt den vorherrschenden Kontrast und kann zur Bestimmung der Funktionsreserve, d.h. zur Bestimmung der Betriebssicherheit des Sensors in der jeweiligen Applikation verwendet werden.

Der erfasste Dynamikumfang gibt an, in welchen verschiedenen Helligkeitswerten bzw. verschiedenen Farbwerten eine Druckmarke vorkommt. Der Einsatz innovativer Verpackungsmaterialien mit partiellen Designelementen aus hochglänzenden Lacken stellt höchste Anforderungen an die erforderliche Signaldynamik, die zudem durch die Anordnung des Sensors zum Objekt (Montagewinkel) beeinflusst wird. Die zeitliche Bewertung der sensorinhärenten Signale erlaubt Rückschlüsse auf die korrekte Montage bzw. die korrekte Parametrierung des Sensors.

Fremdlichteinflüsse werden beispielsweise durch Leuchtstofflampen, Glühlampen oder moderne LED-Lampen mit unterschiedlichen Frequenzspektren hervorgerufen. Jedoch können auch Störungen durch Reflexionen oder durch Sonnenlicht Fremdlichteinflüsse darstellen. Da sich Fremdlichteinflüsse auf Druckmarke und Hintergrund gleichermaßen auswirken, können Fremdlichteinflüsse aus den Empfängersignalen abgeleitet werden und der Einfluss auf die Funktionsreserve ermittelt werden. Bei zu hoher ermittelter Beeinträchtigung der Detektionsfähigkeit kann dann beispielsweise eine Warnung über eine Schnittstelle ausgegeben werden.

Der Druckmarkensensor kann beispielsweise eine Temperatur erfassen oder Temperatureinflüsse auswerten. Beispielsweise können Veränderungen in den Lichtempfängersignalen der Druckmarke ins Verhältnis zur erfassten Temperatur gesetzt werden und insbesondere bei Temperaturen nahe oder außerhalb der zulässigen Temperaturgrenzen, Rückschlüsse auf die verbleibende Funktionsreserve ermittelt werden.

In einer vorteilhaften Weiterbildung der Erfindung ist die Steuer- und Auswerteeinheit ausgebildet, aus der Vielzahl von Lichtempfängersignalen Korrekturwerte der Detektionsparameter bei einem Maschinenanlauf, während des Maschinenbetriebes und/oder während Beschleunigungsphasen bzw. Verzögerungsphasen gegenüber den Detektionsparametern des Nennbetriebes zu ermitteln. Diese können auch als Eigenschaften des Anlageprozesses bezeichnet werden. Dadurch kann die Funktionsreserve des Druckmarkensensors, insbesondere bei einem Maschinenanlauf oder bei Beschleunigungs- oder Verzögerungsphasen erhöht werden.

In einer vorteilhaften Weiterbildung der Erfindung ist die Steuer- und Auswerteeinheit ausgebildet, aus der Vielzahl von Lichtempfängersignalen einen typischen Kontrastverlauf zwischen einer Druckmarke und dem Hintergrund über eine bestimmte Anzahl von Druckformaten zu ermitteln. Beispielsweise können Abweichungen von einem typischen Kontrastverlauf in einem Druckprozess Auskunft über die Zuführung der Druckfarbe geben und zur Prozesssteuerung eingesetzt werden.

In einer vorteilhaften Weiterbildung der Erfindung ist die Steuer- und Auswerteeinheit ausgebildet, aus der Vielzahl von Lichtempfängersignalen ein Maß für eine Homogenität eines zu bedruckenden Materials zu ermitteln.

Eine detektierte Homogenität gibt an, ob das zu bedruckende Trägermaterial in Farbe oder Helligkeit gleichmäßig ausgebildet ist. Das Trägermaterial wird häufig in Form von Materialrollen eingesetzt. Durch die Überwachung der Homogenität können beispielsweise mögliche Verschmutzungen oder Helligkeitsänderungen von Rollenanfang bis Rollenende bewertet werden und daraus auf die Qualität des Trägermaterials geschlossen werden.

In einer vorteilhaften Weiterbildung der Erfindung ist die Steuer- und Auswerteeinheit ausgebildet, die Vielzahl von Lichtempfängersignalen zu analysieren und für eine Anwendung des Druckmarkensensors ein Einlernverfahren aus verschiedenen gespeicherten Algorithmen auszuwählen und/oder dem Anwender vorzuschlagen.

Der Druckmarkenkontrast wird üblicherweise im Rahmen eines Teach-In-Prozesses eingelernt, z.B. durch statisches Einlernen bzw. 1-Punkt-Teach-In oder durch 2- Punkt-Teach-In auf Marke und Hintergrund. Diese für die jeweiligen Einlernpunkte optimale Einstellung zur Detektion der Kontrastverhältnisse kann sich aufgrund der realen Umgebungs- und Maschinenbedingungen ändern, so dass sich nach der Analyse einer ausreichend großen Menge an Formaten, d.h. nach einer Bewertung über längere Zeiträume, ein anderes, besser für die Rahmenbedingungen geeignetes Einlernverfahren anbietet, das zu einer verbesserten Detektionsleistung des Sensors führt. Aufgrund der Signalbewertung kann der Sensor besser geeignete Einlernverfahren auswählen und/oder dem Anwender vorschlagen.

In einer vorteilhaften Weiterbildung der Erfindung ist die Steuer- und Auswerteeinheit ausgebildet, aus der Vielzahl von Lichtempfängersignalen mindestens eine Kenngröße zu ermitteln und diese Kenngröße zur Optimierung eines Arbeitspunktes für eine Detektion von Druckmarken durch Veränderung von Detektionsparametern des Druckmarkensensors zu verwenden.

Kenngrößen können beispielsweise die Größen Kontrast, Farbe, Materialgeschwindigkeit, Temperatur oder auch deren bestimmte zeitliche Verläufe darstellen. Durch Auswertung einer oder mehrerer dieser Kenngrößen kann der Arbeitspunkt des Sensors neu eingestellt werden, um so z.B. eine bestimmte Funktionsreserve zu erhalten.

Dies kann der Fall sein, wenn sich beispielsweise das Druckbild oder die Materialgeschwindigkeit planmäßig ändert, oder auch wenn sich z.B. die Umgebungstemperatur verändert.

In einer vorteilhaften Weiterbildung der Erfindung ist die Steuer- und Auswerteeinheit ausgebildet, aus der Vielzahl von Lichtempfängersignalen mindestens eine Kenngröße zu ermitteln, wobei die Kenngröße eine Einschaltzeit einer Druckmaschine oder einer Verpackungsmaschine ist, ein Betriebsstundenzählerwert ist, ein Verhältnis von Einschaltzeit zur Prozesszeit der Druckmaschine oder Verpackungsmaschine ist, mindestens ein statistischer Wert zur Bahngeschwindigkeit der Druckmarken ist, ein Datum und/oder eine Systemzeit der letzten Parametrierung der Druckmaschine oder Verpackungsmaschine ist, eine Qualität der Materialführung ist, eine Anzahl gelesener Druckmarken über einen definierten Zeitraum ist, eine Druckmarkenqualität oder eine Detektionsqualität über einen definierten Zeitraum ist, eine Varianz einer Detektionsqualität über einen definierten Zeitraum als Indikator für eine System- oder Druckmarkendegradation ist, eine Varianz der Druckmarkenqualität über einen definierten Zeitraum ist und/oder ein Umweltbedingungswert ist.

Die Einschaltzeit der Druckmaschine oder Verpackungsmaschine kann dadurch bestimmt werden, dass die Zeit vom Stillstand der erkannten Druckmarke bis zum Erreichen einer bekannten oder gleichmäßigen Geschwindigkeit der Druckmarken gemessen wird und die Zeit als Einschaltzeit ausgegeben wird.

Ein Betriebsstundenzählerwert kann dadurch gebildet werden, dass die Zeiträume während denen beispielsweise eine Bewegung der Druckmarken erkannt wird gemessen und aufaddiert werden und dieser Wert gespeichert wird, so dass dieser nichtflüchtig erhalten bleibt.

Die ermittelte Einschaltzeit kann auch zu einer Prozesszeit ins Verhältnis gesetzt werden. Als Prozesszeit wird die Zeit bezeichnet, in der sich die Druckmarken bewegen, also die Zeit während der Produkte mit Druckmarken hergestellt werden.

Weiter kann vorgesehen sein, mindestens einen statistischen Wert zur Bahngeschwindigkeit der Druckmarken zu bestimmen. Dadurch ist es möglich, eine statistische Auswertung vorzunehmen.

Weiter kann ein Datum und/oder eine Systemzeit der letzten Parametrierung der Druckmaschine oder Verpackungsmaschine gespeichert und bereitgestellt werden. Die Parametrierung ist beispielsweise dadurch feststellbar, dass sich beispielsweise die Geschwindigkeit der Druckmarke geändert hat. Die Systemzeit wird durch eine im Druckmarkensensor vorgesehene Uhr bereitgestellt.

Weiter kann durch den Druckmarkensensor eine Anzahl gelesener Druckmarken über einen definierten Zeitraum ermittelt werden. Dadurch kann die Anzahl produzierter Produkte bzw. die Anzahl produzierter Druckmarken bereitgestellt werden. Ein zusätzlicher Sensor zur Zählung entfällt.

Die Detektionsqualität bezeichnet den aktuellen Konfidenzwert, typischerweise in Prozent, für die Detektion der Druckmarke. Damit wird die Sicherheit, typischerweise als Prozentwert, bezeichnet, mit welcher der Detektor eine Druckmarke erkannt hat. Die Detektionsqualität wird also bei jeder Detektion einer Druckmarke aktualisiert.

Für die Ermittlung der Detektionsqualität können z. B. ein Dynamikumfang des Messsignals, eine Flankensteilheit des Messsignals, ein Rauschen oder Sättigungszustände berücksichtigt werden.

Weiter kann eine Varianz der Detektionsqualität über einen definierten Zeitraum bestimmt werden. Dabei werden beispielsweise für alle unterschiedlich detektierten Druckmarken eine Information und die jeweiligen Lichtempfangssignale abgespeichert, so dass eine Varianz der Detektionsqualität bestimmt werden kann. Daraus lassen sich Rückschlüsse auf die Einhaltung der Funktionsreserve ermitteln.

Ein Umweltbedingungswert ist beispielsweise eine gemessene Temperatur, detektiertes Fremdlicht, eine detektierte Feuchte oder eine detektierte Vibration, die der Steuer-und Auswerteeinheit bereitgestellt wird.

In einer vorteilhaften Weiterbildung der Erfindung ist die Steuer- und Auswerteeinheit ausgebildet, aus der Vielzahl von Lichtempfängersignalen mindestens eine Kenngröße zu ermitteln, wobei die Kenngröße eine Information zur Qualität der Sensorfunktion ist, wobei die Kenngröße ein Funktionsreservewert unter Berücksichtigung von Umwelteinflüssen ist, ein Bewertungswert eines gewählten Einlernverfahrens zu alternativen Einlernverfahren ist, ein Empfehlungswert eines am besten geeignetsten Einlernverfahrens ist, ein Wert zur erforderlichen und/oder einer aktuellen Signaldynamik ist, gespeicherte Fehlerbilder zu kritischen Detektionszuständen sind und/oder eine Ausrichtung des Sensors ist.

Im Unterschied zur Detektionsqualität wird für die Funktionsreserve ein kontinuierlich bestimmter Konfidenzwert, typischerweise in Prozent, für die Detektionsfähigkeit bestimmt. Dieser berücksichtigt daher die Möglichkeit der Fehldetektion in Form von sowohl falschen Positiven als auch falschen Negativen, also verpassten Marken.

Für die Ermittlung der Funktionsreserve können ebenso wie bei der Detektionsqualität z. B. Dynamikumfang des Messsignals, eine Flankensteilheit des Messsignals, ein Rauschen oder Sättigungszustände berücksichtigt werden.

Weiter kann ein Bewertungswert eines gewählten Einlernverfahrens zu alternativen Einlernverfahren ermittelt und bereitgestellt werden. Beispielsweise kann über einen definierten Zeitraum ermittelt werden, ob die in einem ersten Einlernvorgang gewählte Bewertungsschwelle geeignet zu den Druckmarkensignalen gesetzt wurde oder ob die Schwelle, z.B. durch ein alternatives Einlernverfahren besser angepasst werden könnte. Der Bewertungswert ist quasi ein Eignungswert für das betreffende Einlernverfahren.

Abhängig vom ermittelten Bewertungswert kann einem Anwender ein Empfehlungswert eines am besten geeignetsten Einlernverfahrens bereitgestellt werden.

Weiter kann ein Wert zu einer erforderlichen und/oder einer aktuellen Signaldynamik ermittelt werden. Beispielsweise wird eine Signaldynamik ermittelt und daraus ein Wert ermittelt der angibt, ob die Signaldynamik, beispielsweise durch eine bessere Sensormontage, z.B. durch Ändern von Abstand oder Ausrichtwinkel, verbessert werden sollte.

Weiter können Fehlerbilder zu kritischen Detektionszuständen ermittelt und abgespeichert werden. Fehlerbilder sind eine Menge von Informationen, die der Druckmarkensensor ermitteln kann, beispielsweise eine weitere Kenngröße, wie beispielsweise eine Temperatur, eine Vibration usw.

Weiter kann der Druckmarkensensor eine Ausrichtung des Sensors selbst oder im Verhältnis zur Druckmarke ermitteln und ausgeben.

Die Erfindung wird nachstehend auch hinsichtlich weiterer Vorteile und Merkmale unter Bezugnahme auf die beigefügte Zeichnung anhand von Ausführungsbeispielen erläutert. Die Figur der Zeichnung zeigt in:

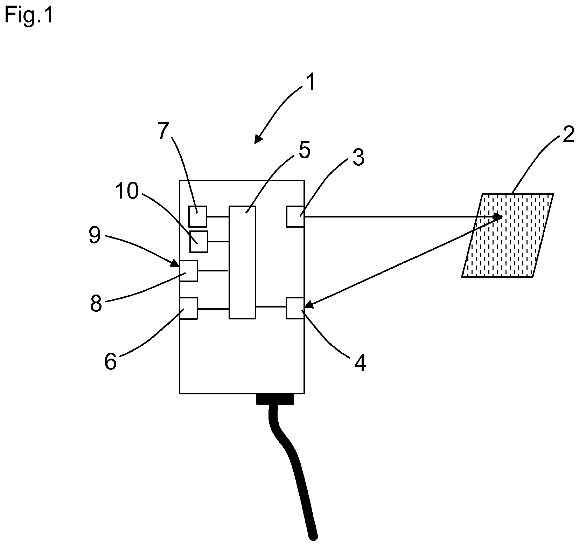

- Figur 1: einen Druckmarkensensor.

Figur 1 zeigt einen Druckmarkensensor 1 zur Auswertung von Druckmarken 2 mit mindestens einem Lichtsender 3 und mindestens einem Lichtempfänger 4 mit einer Steuer- und Auswerteeinheit 5 zur Auswertung des Lichtempfängersignals des Lichtempfängers 4, mit einem Ausgang 6 für ein Sensorsignal, welches von der Steuer- und Auswerteeinheit 5 gebildet wird aufgrund des Lichtempfängersignals, wobei ein elektronischer Speicher 7 vorhanden ist, um eine Vielzahl von nacheinander detektierten Lichtempfängersignalen von mehreren nacheinander erfassten Druckmarken abzuspeichern, wobei die Steuer- und Auswerteeinheit 5 ausgebildet ist, die Vielzahl von Lichtempfängersignalen von mehreren nacheinander erfassten Druckmarken auszuwerten und Ergebnisdaten und/oder Kenngrößen zu erzeugen.

Der Lichtsender 3, der Lichtempfänger 4, und die Steuer- und Auswerteeinheit 5 sind dabei in einem gemeinsamen Gehäuse bzw. Sensorgehäuse angeordnet.

Der Druckmarkensensor 1 ist beispielsweise an einer Druckmaschine, einer Verpackungsmaschine, einer Verarbeitungsmaschine für Produkte usw. angeordnet.

Der Lichtsender 3 ist beispielsweise durch eine oder mehrere Leuchtdioden oder Laserdioden gebildet. Der Lichtempfänger 4 ist beispielsweise durch eine oder mehrere Photodioden gebildet. Der Druckmarkensensor 1 kann beispielsweise als Lichttaster ausgebildet sein. Der Lichtsender 3 und der Lichtempfänger 4 sind in einem gemeinsamen Gehäuse angeordnet, in dem auch die Steuer- und Auswerteeinheit 5 angeordnet ist. Der Druckmarkensensor 1 kann weitere Sensoren 10 zur Detektion sonstiger Umgebungsbedingungen, wie z.B. Temperatur besitzen.

Die Ergebnisdaten und/oder Kenngrößen sind an dem Ausgang 6 oder an einem zusätzlichen Ausgang 8 oder an einer zusätzlichen Schnittstelle 9 ausgebbar.

### Bezugszeichen:

1 Druckmarkensensor
2 Druckmarken
3 Lichtsender
4 Lichtempfänger
5 Steuer- und Auswerteeinheit
6 Ausgang
7 Speicher
8 zusätzlicher Ausgang
9 zusätzliche Schnittstelle
10 Sensor

## Patentansprüche

1. Druckmarkensensor (1) zur Auswertung von Druckmarken (2) von Detektionsobjekten,
mit mindestens einem Lichtsender (3) und mindestens einem Lichtempfänger (4)
mit einer Steuer- und Auswerteeinheit (5) zur Auswertung eines Lichtempfängersignals des Lichtempfängers (4),
mit einem Ausgang (6) für ein Sensorsignal, welches von der Steuer- und Auswerteeinheit (5) gebildet wird aufgrund des Lichtempfängersignals,
wobei
ein elektronischer Speicher (7) vorhanden ist,
**dadurch gekennzeichnet, dass** eine Vielzahl von nacheinander detektierten Lichtempfängersignalen von mehreren nacheinander erfassten Druckmarken abgespeichert werden,
wobei die Steuer- und Auswerteeinheit (5) ausgebildet ist, die Vielzahl von Lichtempfängersignalen von mehreren nacheinander erfassten Druckmarken (2) auszuwerten und aus dem zeitlichen Verlauf dieser Lichtempfängersignale Ergebnisdaten und/oder Kenngrößen zu erzeugen, die Rückschlüsse auf eine Umgebung des Druckmarkensensors (1), auf die Detektionsobjekte, auf die Druckmarken und/oder einen Bedruckungsprozess ermöglichen, wobei Lichtsender (3), Lichtempfänger (4), und die Steuer- und Auswerteeinheit (5) in einem gemeinsamen Sensorgehäuse angeordnet sind.

2. Druckmarkensensor (1) nach Anspruch 1, **dadurch gekennzeichnet, dass** die Ergebnisdaten und/oder Kenngrößen an dem Ausgang (6) oder an einem zusätzlichen Ausgang (8) oder an einer zusätzlichen Schnittstelle (9) ausgebbar sind.

3. Druckmarkensensor (1) nach einem der vorhergehenden Ansprüche, **dadurch gekennzeichnet, dass** die Steuer- und Auswerteeinheit (5) ausgebildet ist, aus der Vielzahl von Lichtempfängersignalen eine Materialgeschwindigkeit, eine Tastweitenschwankung, einen Dynamikumfang, Fremdlichteinflüsse und/oder Temperatureinflüsse zu ermitteln oder die Steuer- und Auswerteeinheit (5) ausgebildet ist, aus der Vielzahl von Lichtempfängersignalen Korrekturwerte der Detektionsparameter einer Druckmarke bei einem Maschinenanlauf, während des Maschinenbetriebes und/oder während Beschleunigungsphasen bzw. Verzögerungsphasen gegenüber den Detektionsparametern des Nennbetriebs der Maschine zu ermitteln.

4. Druckmarkensensor (1) nach einem der vorhergehenden Ansprüche, **dadurch gekennzeichnet, dass** die Steuer- und Auswerteeinheit (5) ausgebildet ist, aus der Vielzahl von Lichtempfängersignalen einen typischen Kontrastverlauf zwischen einer Druckmarke (2) und dem Hintergrund über eine bestimmte Anzahl von Druckformaten zu ermitteln oder die Steuer- und Auswerteeinheit (5) ausgebildet ist, aus der Vielzahl von Lichtempfängersignalen ein Maß für eine Homogenität eines zu bedruckenden Materials zu ermitteln.

5. Druckmarkensensor (1) nach einem der vorhergehenden Ansprüche, **dadurch gekennzeichnet, dass** die Steuer- und Auswerteeinheit (5) ausgebildet ist, die Vielzahl von Lichtempfängersignalen zu analysieren und für eine Anwendung des Druckmarkensensors (1) ein Einlernverfahren aus verschiedenen gespeicherten Algorithmen auszuwählen und/oder dem Anwender vorzuschlagen oder die Steuer- und Auswerteeinheit (5) ausgebildet ist, aus der Vielzahl von Lichtempfängersignalen mindestens eine Kenngröße zu ermitteln und diese Kenngröße zur Optimierung eines Arbeitspunktes für eine Detektion von Druckmarken durch Veränderung von Detektionsparametern des Druckmarkensensors zu verwenden.

6. Druckmarkensensor (1) nach einem der vorhergehenden Ansprüche, **dadurch gekennzeichnet, dass** die Steuer- und Auswerteeinheit (5) ausgebildet ist, aus der Vielzahl von Lichtempfängersignalen mindestens eine Kenngröße zu ermitteln, wobei die Kenngröße eine Einschaltzeit einer Druckmaschine oder einer Verpackungsmaschine ist,
ein Betriebsstundenzählerwert ist,
ein Verhältnis von Einschaltzeit zur Prozesszeit der Druckmaschine oder Verpackungsmaschine ist,
mindestens ein statistischer Wert zur Bahngeschwindigkeit der Druckmarken (2) ist,
ein Datum und/oder eine Systemzeit der letzten Parametrierung der Druckmaschine oder Verpackungsmaschine ist,
eine Anzahl gelesener Druckmarken (2) über einen definierten Zeitraum ist, eine Detektionsqualität über einen definierten Zeitraum ist,
eine Varianz einer Detektionsqualität über einen definierten Zeitraum als Indikator für eine System- oder Druckmarkendegradation ist,
und/oder
ein Umweltbedingungswert ist.

7. Druckmarkensensor (1) nach einem der vorhergehenden Ansprüche, **dadurch gekennzeichnet, dass** die Steuer- und Auswerteeinheit (5) ausgebildet ist, aus der Vielzahl von Lichtempfängersignalen mindestens eine Kenngröße zu ermitteln, wobei die Kenngröße eine Information zur Qualität der Sensorfunktion ist, wobei die Kenngröße
ein Funktionsreservewert unter Berücksichtigung von Umwelteinflüssen ist, ein Bewertungswert eines gewählten Einlernverfahrens zu alternativen Einlernverfahren ist,
ein Empfehlungswert eines am besten geeignetsten Einlernverfahrens ist, ein Wert zur erforderlichen und/oder einer aktuellen Signaldynamik ist, gespeicherte Fehlerbilder zu kritischen Detektionszuständen sind,
und/oder
eine Ausrichtung des Druckmarkensensors (1) ist.

8. Verfahren zur Auswertung von Druckmarken (2) von Detektionsobjekten mit einem Druckmarkensensor (1)
mit mindestens einem Lichtsender (3) zum Aussenden von Lichtstrahlen und mindestens einem Lichtempfänger (4) zum Empfangen von remittierten Lichtstrahlen und
Auswertung eines Lichtempfängersignals des Lichtempfängers (4) durch eine Steuer- und Auswerteeinheit (5),
wobei ein Sensorsignal von der Steuer- und Auswerteeinheit (5) gebildet wird aufgrund des Lichtempfängersignals und an einem Ausgang (6) ausgegeben wird,
**dadurch gekennzeichnet, dass**
eine Vielzahl von nacheinander detektierten Lichtempfängersignalen von nacheinander erfassten Druckmarken (2) in einem elektronischen Speicher (7) abgespeichert werden,
wobei die Vielzahl von Lichtempfängersignalen von mehreren nacheinander erfassten Druckmarken (2) ausgewertet werden und aus dem zeitlichen Verlauf dieser Lichtempfängersignale Ergebnisdaten und/oder Kenngrößen erzeugt werden, die Rückschlüsse auf eine Umgebung des Druckmarkensensors (1), auf die Detektionsobjekte, auf die Druckmarken (2) und/oder einen Bedruckungsprozess ermöglichen, wobei der Lichtsender (3), der Lichtempfänger (4), und die Steuer- und Auswerteeinheit (5) in einem gemeinsamen Sensorgehäuse angeordnet sind.

9. Verfahren nach Anspruch 8, **dadurch gekennzeichnet, dass** die Ergebnisdaten und/oder Kenngrößen an dem Ausgang (6) oder an einem zusätzlichen Ausgang (8) oder an einer zusätzlichen Schnittstelle (9) ausgebbar sind, wobei die Ergebnisdaten kontinuierlich erzeugbar sind und kontinuierlich ausgebbar sind.

10. Verfahren nach Anspruch 8, **dadurch gekennzeichnet, dass** durch die Steuer-und Auswerteeinheit (5) aus der Vielzahl von Lichtempfängersignalen eine Materialgeschwindigkeit, eine Tastweitenschwankung, ein Dynamikumfang, Fremdlichteinflüsse und/oder Temperatureinflüsse ermittelt werden oder durch die Steuer- und Auswerteeinheit (5) aus der Vielzahl von Lichtempfängersignalen eine Positionsgenauigkeit einer Druckmarke (2) bei einem Maschinenanlauf, während des Maschinenbetriebes und/oder während Beschleunigungsphasen bzw. Verzögerungsphasen ermittelt werden.

11. Verfahren nach mindestens einem der vorhergehenden Ansprüche 8 bis 10, **dadurch gekennzeichnet, dass** durch die Steuer- und Auswerteeinheit (5) aus der Vielzahl von Lichtempfängersignalen ein Kontrastverlauf zwischen einer Druckmarke (2) und dem Hintergrund über eine bestimmte Anzahl von Druckformaten ermittelt wird oder durch die Steuer- und Auswerteeinheit (5) aus der Vielzahl von Lichtempfängersignalen ein Maß für eine Homogenität eines zu bedruckenden Materials ermittelt wird.

12. Verfahren nach mindestens einem der vorhergehenden Ansprüche 8 bis 11, **dadurch gekennzeichnet, dass** durch die Steuer- und Auswerteeinheit (5) die Vielzahl von Lichtempfängersignalen analysiert wird und für eine Anwendung des Druckmarkensensors (1) ein Einlernverfahren aus verschiedenen gespeicherten Algorithmen ausgewählt wird und/oder dem Anwender vorgeschlagen wird.

13. Verfahren nach mindestens einem der vorhergehenden Ansprüche 8 bis 12, **dadurch gekennzeichnet, dass** durch die Steuer- und Auswerteeinheit (5) aus der Vielzahl von Lichtempfängersignalen mindestens eine Kenngröße ermittelt wird und diese Kenngröße zur Optimierung eines Arbeitspunktes für eine Detektion von Druckmarken (2) durch Veränderung von Detektionsparametern des Druckmarkensensors (1) verwendet wird.

14. Verfahren nach mindestens einem der vorhergehenden Ansprüche 8 bis 13, **dadurch gekennzeichnet, dass** durch die Steuer- und Auswerteeinheit (5) aus der Vielzahl von Lichtempfängersignalen mindestens eine Kenngröße ermittelt wird, wobei die Kenngröße
eine Einschaltzeit einer Druckmaschine oder einer Verpackungsmaschine ist, ein Betriebsstundenzählerwert ist,
ein Verhältnis von Einschaltzeit zur Prozesszeit der Druckmaschine oder Verpackungsmaschine ist,
mindestens ein statistischer Wert zur Bahngeschwindigkeit der Druckmarken (2) ist,
ein Datum und/oder eine Systemzeit der letzten Parametrierung der Druckmaschine ist,
eine Anzahl gelesener Druckmarken (2) über einen definierten Zeitraum ist, eine Detektionsqualität über einen definierten Zeitraum ist,
eine Varianz einer Detektionsqualität über einen definierten Zeitraum als Indikator für eine System- oder Druckmarkendegradation ist,
eine Varianz der Druckmarkenqualität über einen definierten Zeitraum ist, und/oder
ein Umweltbedingungswert ist.

15. Verfahren nach mindestens einem der vorhergehenden Ansprüche 8 bis 14, **dadurch gekennzeichnet, dass** durch die Steuer-und Auswerteeinheit (5) aus der Vielzahl von Lichtempfängersignalen mindestens eine Kenngröße ermittelt wird, wobei die Kenngröße eine Information zur Qualität der Sensorfunktion des Druckmarkensensors ist, wobei die Kenngröße
ein Funktionsreservewert unter Berücksichtigung von Umwelteinflüssen ist, ein Bewertungswert eines gewählten Einlernverfahrens zu alternativen Einlernverfahren ist,
ein Empfehlungswert eines am besten geeignetsten Einlernverfahrens ist, ein Wert zur erforderlichen und/oder einer aktuellen Signaldynamik ist, gespeicherte Fehlerbilder zu kritischen Detektionszuständen sind, und/oder
eine Ausrichtung des Druckmarkensensors ist.

## Claims

1. A print mark sensor (1) for evaluating print marks (2) of detection objects, having at least one light transmitter (3) and at least one light receiver (4) having a control and evaluation unit (5) for evaluating a light receiver signal of the light receiver (4),
having an output (6) for a sensor signal that is formed by the control and evaluation unit (5) on the basis of the light receiver signal,
wherein
an electronic memory (7) is present,
**characterized in that** a plurality of consecutively detected light receiver signals of a plurality of consecutively detected print marks are stored wherein the control and evaluation unit (5) is configured to evaluate the plurality of light receiver signals of a plurality of consecutively detected print marks (2) and to generate results data and/or parameters from the time progression of these light receiver signals that enable conclusions on an environment of the print mark sensor (1), on the detection objects, on the print marks and/or on a printing process, and wherein the light transmitter (3), the light receiver (4), and the control and evaluation unit (5) are arranged in a common sensor housing.

2. A print mark sensor (1) in accordance with claim 1, **characterized in that** the results data and/or parameters can be output to the output (6) or to an additional output (8) or to an additional interface (9).

3. A print mark sensor (1) in accordance with one of the preceding claims, **characterized in that** the control and evaluation unit (5) is configured to determine a material speed, a scanning range variation, a dynamic range, extraneous light influences and/or temperature influences from the plurality of light receiver signals; or **in that** the control and evaluation unit (5) is configured to determine correction values of the detection parameters of a print mark from the plurality of light receiver signals on a machine start, during the machine operation and/or during acceleration phases or deceleration phases with respect to the nominal operation of the machine.

4. A print mark sensor (1) in accordance with any one of the preceding claims, **characterized in that** the control and evaluation unit (5) is configured to determine a typical contrast development between a print mark (2) and the background over a specific number of print formats from the plurality of light receiver signals; or **in that** the control and evaluation unit (5) is configured to determine a measure for a homogeneity of a material to be printed from the plurality of light receiver signals.

5. A print mark sensor (1) in accordance with any one of the preceding claims, **characterized in that** the control and evaluation unit (5) is configured to analyze the plurality of light receiver signals and to select a teaching process from different stored algorithms for an application of the print mark sensor (1) and/or to propose it to the user; or **in that** the control and evaluation unit (5) is configured to determine at least one parameter from the plurality of light receiver signals and to use this parameter for optimizing a working point for a detection of print marks by changing detection parameters of the print mark sensor.

6. A print mark sensor (1) in accordance with any one of the preceding claims, **characterized in that** the control and evaluation unit (5) is configured to determine at least one parameter from the plurality of light receiver signals, wherein the parameter is a switch-on time of a printing machine or of a packaging machine;
is an operating hour counter value;
is a ratio of switch-on time to the process time of the printing machine or packaging machine;
is at least one statistical value on the path speed of the print marks (2);
is a date and/or a system time of the last parameterization of the printing machine or packaging machine;
is a plurality of print marks (2) read over a defined time period;
is a detection quality over a defined time period;
is a variance of a detection quality over a defined time period as an indicator for a system degradation or print mark degradation;
and/or
is an environmental condition value.

7. A print mark sensor (1) in accordance with any one of the preceding claims, **characterized in that** the control and evaluation unit (5) is configured to determine at least one parameter from the plurality of light receiver signals, wherein the parameter is a piece of information on the quality of the sensor function, wherein the parameter
is a functional reserve value while taking account of environmental influences;
is an evaluation value of a selected teaching process with respect to alternative teaching processes;
is a recommendation value of a most suitable teaching process;
is a value on the required and/or current signal dynamics;
are stored error images on critical detection states;
and/or
is an alignment of the print mark sensor (1).

8. A method of evaluating print marks (2) of detection objects using a print mark sensor (1)
having at least one light transmitter (3) for transmitting light beams and at least one light receiver (4) for receiving remitted light beams; and evaluating a light receiver signal of the light receiver (4) by a control and evaluation unit (5),
wherein a sensor signal is formed by the control and evaluation unit (5) on the basis of the light receiver signal and is output to an output (6),
**characterized in that**
a plurality of consecutively detected light receiver signals of consecutively detected print marks (2) are stored in an electronic memory (7),
wherein the plurality of light receiver signals of a plurality of consecutively detected print marks (2) are evaluated and results data and/or parameters are generated from the time progression of these light receiver signals that enable conclusions on an environment of the print mark sensor (1), on the detection objects, on the print marks (2) and/or on a printing process, and wherein the light transmitter (3), the light receiver (4), and the control and evaluation unit (5) are arranged in a common sensor housing.

9. A method in accordance with claim 8, **characterized in that** the results data and/or parameters can be output to the output (6) or to an additional output (8) or to an additional interface (9), wherein the results data can be produced continuously and can be output continuously.

10. A method in accordance with claim 8, **characterized in that** a material speed, a scanning range variation, a dynamic range, extraneous light influences and/or temperature influences are determined from the plurality of light receiver signals by the control and evaluation unit (5); or **in that** a position accuracy of a print mark (2) is determined from a plurality of light receiver signals by the control and evaluation unit (5) on a machine start, during the machine operation and/or during acceleration phases or deceleration phases.

11. A method in accordance with at least one of the preceding claims 8 to 10, **characterized in that** a contrast development between a print mark (2) and the background is determined by the control and evaluation unit (5) over a specific number of print formats from the plurality of light receiver signals; or **in that** a measure for the homogeneity of a material to be printed is determined from the plurality of light receiver signals.

12. A method in accordance with at least one of the preceding claims 8 to 11, **characterized in that** the plurality of light receiver signals are analyzed by the control and evaluation unit (5) and a teaching process is selected from different stored algorithms for an application of the print mark sensor (1) and/or is proposed to the user.

13. A method in accordance with at least one of the preceding claims 8 to 12, **characterized in that** at least one parameter is determined from the plurality of light receiver signals by the control and evaluation unit (5) and this parameter is used for optimizing a working point for a detection of print marks (2) by changing detection parameters of the print mark sensor (1).

14. A method in accordance with at least one of the preceding claims 8 to 13, **characterized in that** at least one parameter is determined from the plurality of light receiver signals by the control and evaluation unit (5), wherein the parameter
is a switch-on time of a printing machine or of a packaging machine;
is an operating hour counter value;
is a ratio of switch-on time to the process time of the printing machine or packaging machine;
is at least one statistical value on the path speed of the print marks (2);
is a date and/or a system time of the last parameterization of the printing machine;
is a plurality of print marks (2) read over a defined time period;
is a detection quality over a defined time period;
is a variance of a detection quality over a defined time period as an indicator for a system degradation or print mark degradation;
is a variance of the print mark quality over a defined time period;
and/or
is an environmental condition value.

15. A method in accordance with at least one of the preceding claims 8 to 14, **characterized in that** at least one parameter is determined from the plurality of light receiver signals by the control and evaluation unit (5), wherein the parameter is a piece of information on the quality of the sensor function of the print mark sensor, wherein the parameter
is a functional reserve value while taking account of environmental influences;
is an evaluation value of a selected teaching process with respect to alternative teaching processes;
is a recommendation value of a most suitable teaching process;
is a value on the required and/or current signal dynamics;
are stored error images on critical detection states;
and/or
is an alignment of the print mark sensor.

## Revendications

1. Détecteur de marques d'impression (1) pour évaluer des marques d'impression (2) d'objets à détecter, comportant
au moins un émetteur de lumière (3) et au moins un récepteur de lumière (4),
une unité de commande et d'évaluation (5) pour évaluer un signal du récepteur de lumière (4),
une sortie (6) pour un signal de détecteur qui est formé par l'unité de commande et d'évaluation (5) en raison du signal du récepteur de lumière, dans lequel il est prévu une mémoire électronique (7),
**caractérisé en ce que**
une multitude de signaux de récepteur de lumière détectés successivement de plusieurs marques d'impression détectées successivement sont mémorisés,
l'unité de commande et d'évaluation (5) est réalisée pour évaluer ladite multitude de signaux de récepteur de lumière de plusieurs marques d'impression (2) détectées successivement et pour générer, à partir de l'évolution temporelle de ces signaux de récepteur de lumière, des données de résultat et/ou des grandeurs caractéristiques qui permettent des conclusions à un environnement du détecteur de marques d'impression (1), aux objets à détecter, aux marques d'impression et/ou à un processus d'impression, l'émetteur de lumière (3), le récepteur de lumière (4) et l'unité de commande et d'évaluation (5) étant agencés dans un boîtier de détecteur commun.

2. Détecteur de marques d'impression (1) selon la revendication 1, **caractérisé en ce que** les données de résultat et/ou les grandeurs caractéristiques sont susceptibles d'être émises à la sortie (6) ou à une sortie supplémentaire (8) ou à une interface supplémentaire (9).

3. Détecteur de marques d'impression (1) selon l'une des revendications précédentes, **caractérisé en ce que** l'unité de commande et d'évaluation (5) est réalisée pour déterminer, à partir de ladite multitude de signaux de récepteur de lumière, une vitesse du matériau, une fluctuation de la portée de balayage, une plage dynamique, des influences de lumière étrangère et/ou des influences de température, ou l'unité de commande et d'évaluation (5) est réalisée pour déterminer, à partir de ladite multitude de signaux de récepteur de lumière, des valeurs de correction des paramètres de détection d'une marque d'impression au démarrage d'une machine, pendant le fonctionnement de la machine et/ou pendant des phases d'accélération ou des phases de décélération, par rapport aux paramètres de détection du fonctionnement nominal de la machine.

4. Détecteur de marques d'impression (1) selon l'une des revendications précédentes, **caractérisé en ce que** l'unité de commande et d'évaluation (5) est réalisée pour déterminer, à partir de ladite multitude de signaux de récepteur de lumière, une évolution de contraste typique entre une marque d'impression (2) et l'arrière-plan sur un certain nombre de formats d'impression, ou l'unité de commande et d'évaluation (5) est réalisée pour déterminer, à partir de ladite multitude de signaux de récepteur de lumière, une valeur relative à une homogénéité d'un matériau support d'impression.

5. Détecteur de marques d'impression (1) selon l'une des revendications précédentes, **caractérisé en ce que** l'unité de commande et d'évaluation (5) est réalisée pour analyser ladite multitude de signaux de récepteur de lumière et pour choisir et/ou pour proposer à l'applicateur une méthode d'apprentissage parmi différents algorithmes mémorisés en vue d'une application du détecteur de marques d'impression (1), ou l'unité de commande et d'évaluation (5) est réalisée pour déterminer, à partir de ladite multitude de signaux de récepteur de lumière, au moins une grandeur caractéristique et pour utiliser cette grandeur caractéristique afin d'optimiser un point de travail pour une détection de marques d'impression par modification de paramètres de détection du détecteur de marques d'impression.

6. Détecteur de marques d'impression (1) selon l'une des revendications précédentes, **caractérisé en ce que** l'unité de commande et d'évaluation (5) est réalisée pour déterminer, à partir de ladite multitude de signaux de récepteur de lumière, au moins une grandeur caractéristique, ladite grandeur caractéristique étant un temps de mise en marche d'une machine d'impression ou d'une machine d'emballage,
une valeur de compteur d'heures de fonctionnement,
un ratio du temps de mise en marche sur le temps de processus de la machine d'impression ou de la machine d'emballage,
au moins une valeur statistique relative à la vitesse de trajectoire des marques d'impression (2),
une date et/ou une heure système du dernier paramétrage de la machine d'impression ou de la machine d'emballage,
un nombre de marques d'impression (2) lues sur une période temporelle définie,
une qualité de détection sur une période temporelle définie,
une variance d'une qualité de détection sur une période temporelle définie à titre d'indicateur d'une dégradation du système ou des marques d'impression,
et/ou
une valeur relative aux conditions environnementales.

7. Détecteur de marques d'impression (1) selon l'une des revendications précédentes, **caractérisé en ce que** l'unité de commande et d'évaluation (5) est réalisée pour déterminer, à partir de ladite multitude de signaux de récepteur de lumière, au moins une grandeur caractéristique, ladite grandeur caractéristique étant une information relative à la qualité de fonctionnement du détecteur,
la grandeur caractéristique étant
une valeur de réserve de fonctionnement en prenant en compte des influences environnementales,
une valeur d'évaluation d'une méthode d'apprentissage choisie par rapport à d'autres méthodes d'apprentissage,
une valeur de recommandation d'une méthode d'apprentissage la plus appropriée,
une valeur relative à la dynamique de signal requise et/ou actuelle,
des images d'erreur mémorisées quant à des états de détection critiques, et/ou
une orientation du détecteur de marques d'impression (1).

8. Procédé d'évaluation de marques d'impression (2) d'objets à détecter à l'aide d'un détecteur de marques d'impression (1), comportant
au moins un émetteur de lumière (3) pour émettre des rayons lumineux et au moins un récepteur de lumière (4) pour recevoir des rayons lumineux réémis, et
d'évaluation d'un signal du récepteur de lumière (4) par une unité de commande et d'évaluation (6),
un signal de détecteur étant formé par l'unité de commande et d'évaluation (5) en raison du signal du récepteur de lumière et étant émis à une sortie (6),
**caractérisé en ce que**
une multitude de signaux de récepteur de lumière détectés successivement de marques d'impression (2) détectées successivement sont mémorisés dans une mémoire électronique (7),
ladite multitude de signaux de récepteur de lumière de plusieurs marques d'impression (2) détectées successivement sont évalués, et à partir de l'évolution temporelle de ces signaux de récepteur de lumière, des données de résultat et/ou des grandeurs caractéristiques sont générées qui permettent des conclusions à un environnement du détecteur de marques d'impression (1), aux objets à détecter, aux marques d'impression (2) et/ou à un processus d'impression, l'émetteur de lumière (3), le récepteur de lumière (4) et l'unité de commande et d'évaluation (5) sont agencés dans un boîtier de détecteur commun.

9. Procédé selon la revendication 8, **caractérisé en ce que** les données de résultat et/ou les grandeurs caractéristiques sont susceptibles d'être émises à la sortie (6) ou à une sortie supplémentaire (8) ou à une interface supplémentaire (9), les données de résultat pouvant être générées en continu et pouvant être émises en continu.

10. Procédé selon la revendication 8, **caractérisé en ce que** l'unité de commande et d'évaluation (5) permet de déterminer, à partir de ladite multitude de signaux de récepteur de lumière, une vitesse du matériau, une fluctuation de la portée de balayage, une plage dynamique, des influences de lumière étrangère et/ou des influences de température, ou l'unité de commande et d'évaluation (5) permet de déterminer, à partir de ladite multitude de signaux de récepteur de lumière, une précision de positionnement d'une marque d'impression (2) au démarrage d'une machine, pendant le fonctionnement de la machine et/ou pendant des phases d'accélération ou des phases de décélération.

11. Procédé selon l'une au moins des revendications précédentes 8 à 10, **caractérisé en ce que** l'unité de commande et d'évaluation (5) permet de déterminer, à partir de ladite multitude de signaux de récepteur de lumière, une évolution de contraste entre une marque d'impression (2) et l'arrière-plan sur un certain nombre de formats d'impression, ou l'unité de commande et d'évaluation (5) permet de déterminer, à partir de ladite multitude de signaux de récepteur de lumière, une valeur relative à une homogénéité d'un matériau support d'impression.

12. Procédé selon l'une au moins des revendications précédentes 8 à 11, **caractérisé en ce que** l'unité de commande et d'évaluation (5) permet d'analyser ladite multitude de signaux de récepteur de lumière et de choisir et/ou de proposer à l'applicateur une méthode d'apprentissage parmi différents algorithmes mémorisés en vue d'une application du détecteur de marques d'impression (1).

13. Procédé selon l'une au moins des revendications précédentes 8 à 12, **caractérisé en ce que** l'unité de commande et d'évaluation (5) permet de déterminer, à partir de ladite multitude de signaux de récepteur de lumière, au moins une grandeur caractéristique et d'utiliser cette grandeur caractéristique afin d'optimiser un point de travail pour une détection de marques d'impression (2) par modification de paramètres de détection du détecteur de marques d'impression (1).

14. Procédé selon l'une des revendications précédentes 8 à 13, **caractérisé en ce que** l'unité de commande et d'évaluation (5) permet de déterminer, à partir de ladite multitude de signaux de récepteur de lumière, au moins une grandeur caractéristique, ladite grandeur caractéristique étant un temps de mise en marche d'une machine d'impression ou d'une machine d'emballage,
une valeur de compteur d'heures de fonctionnement,
un ratio du temps de mise en marche sur le temps de processus de la machine d'impression ou de la machine d'emballage,
au moins une valeur statistique relative à la vitesse de trajectoire des marques d'impression (2),
une date et/ou une heure système du dernier paramétrage de la machine d'impression,
un nombre de marques d'impression (2) lues sur une période temporelle définie,
une qualité de détection sur une période temporelle définie,
une variance d'une qualité de détection sur une période temporelle définie à titre d'indicateur d'une dégradation du système ou des marques d'impression,
une variance de la qualité des marques d'impression sur une période temporelle définie,
et/ou
une valeur relative aux conditions environnementales.

15. Procédé selon l'une au moins des revendications précédentes 8 à 14, **caractérisé en ce que** l'unité de commande et d'évaluation (5) permet de déterminer, à partir de ladite multitude de signaux de récepteur de lumière, au moins une grandeur caractéristique, ladite grandeur caractéristique étant une information relative à la qualité de fonctionnement du détecteur de marques d'impression,
la grandeur caractéristique étant
une valeur de réserve de fonctionnement en prenant en compte des influences environnementales,
une valeur d'évaluation d'une méthode d'apprentissage choisie par rapport à d'autres méthodes d'apprentissage,
une valeur de recommandation d'une méthode d'apprentissage la plus appropriée,
une valeur relative à la dynamique de signal requise et/ou actuelle,
des images d'erreur mémorisées quant à des états de détection critiques, et/ou
une orientation du détecteur de marques d'impression (1).
